Europäisches Patentamt

European Patent Office

Office européen des brevets

(19)

(11) **EP 1 418 210 A1**

(12) **EUROPEAN PATENT APPLICATION**
published in accordance with Art. 158(3) EPC

(43) Date of publication:
 **12.05.2004 Bulletin 2004/20**

(51) Int Cl.⁷: **C09C 3/08**, B01F 17/00,
 B02C 19/00

(21) Application number: **02741313.7**

(22) Date of filing: **26.06.2002**

(86) International application number:
 **PCT/JP2002/006380**

(87) International publication number:
 **WO 2003/000805 (03.01.2003 Gazette 2003/01)**

(84) Designated Contracting States:
 **AT BE CH CY DE DK ES FI FR GB GR IE IT LI LU
 MC NL PT SE TR**

(30) Priority: **26.06.2001 JP 2001193754
 28.01.2002 JP 2002019056**

(71) Applicant: **Sakata Inx Corporation
 Osaka-shi, Osaka 550-0002 (JP)**

(72) Inventors:
 • **ITOH, Kazunori, SAKATA INX CORP.
 Osaka-shi, Osaka 550-0002 (JP)**
 • **MORIKAWA, Yoshiyuki, SAKATA INX CORP.
 Osaka-shi, Osaka 550-0002 (JP)**

(74) Representative: **Jones, Helen Marjorie Meredith
 Gill Jennings & Every,
 Broadgate House,
 7 Eldon Street
 London EC2M 7LH (GB)**

(54) **PROCESS FOR PRODUCING AQUEOUS PIGMENT DISPERSION AND AQUEOUS PIGMENT DISPERSION OBTAINED BY THE PROCESS**

(57) The present invention is to provide a method of producing pigment dispersions which can be suitably used in the fields where higher levels of coloring manifesting ability and fluidity are required, such as in ink jet recording liquids or color filter coloring compositions, and in which pigments are dispersed to such a finer particle size that renders them applicable in the field of printing inks or the like as well and, further, which show very good pigment dispersion stability even after the lapse of time.

The present invention is directed to a method of producing aqueous pigment dispersions which comprises a mixture comprising a pigment, at least one species selected from the group consisting of polymeric emulsifiers having an HLB value of not less than 5 and surfactants having an HLB value of not less than 5, and an aqueous medium passing through an orifice having neither curves nor bends under pressure and, further, ejecting said mixture into that preceding portion of the mixture which has been ejected and is retained in a hollow member larger in diameter than the orifice to thereby attain dispersion of the pigment in the aqueous medium.

EP 1 418 210 A1

**Description**

TECHNICAL FIELD

The present invention relates to a method of producing aqueous pigment dispersions and, more particularly, to a method of producing pigment dispersions which can be more suitably used in ink jet recording liquids or color filter coloring compositions and can further be applied in the field of printing inks and the like and in which the pigments dispersed are smaller in particle diameter and show very good dispersion stability even after the lapse of a fairly long period of time.

BACKGROUND ART

Aqueous pigment dispersions have been long used as base compositions of colorant in the fields of paints, printing inks and so forth. Recently, they are finding new uses in those fields where very sharp and distinct images are required, for example ink jet recording liquids and color filter coloring compositions.

So far, in the field of printing inks as well, they have been required to enable printing of precise and distinct visual images, so that the pigment dispersions serving as bases therefore have been required to manifest their colors in a sharp and distinct manner and have good fluidity, which is a factor exerting an important influence on film formation.

However, in such fields where aqueous pigment dispersions have become newly used, for example in the fields of ink jet recording liquids and color filters, the required level of color manifesting ability is by far higher as compared with printing inks. Furthermore, since ink jet recording systems involve a mechanism of ejecting inks through minute nozzles and, on the other hand, color filters are required to be uniform in film thickness with high accuracy, the recording liquids or colorant compositions to be used therefore are required to have flow characteristics very close to those of Newton flow.

For such reasons, in the field of ink jet recording liquids, for instance, the required levels of color manifesting ability and fluidity have been satisfied in the art by using dyes as the coloring materials. Therefore, for using pigments as the coloring materials in lieu of dyes, it becomes necessary that the levels of color manifesting ability and fluidity comparable to the levels attainable with dyes should be gained with pigments as well. However, neither sharp color manifesting ability nor good fluidity can be obtained without finely dispersing pigment particles and, further maintaining the dispersed state stably.

The method so far used to disperse pigments uses, as the apparatus for finely dispersing pigments, a mill type dispersing apparatus which uses collisions of media with one another, or a high-pressure emulsifying apparatus which used collisions between pigment dispersion streams and the wall of the dispersing apparatus (liquid-wall collisions) and collisions of pigment dispersion streams with one another (liquid-liquid collisions), for instance, to disperse pigments mainly by impact forces. For example, Japanese Kokai Publication Hei-05-271600 discloses the technology of utilizing a mill type dispersing apparatus, such as a ball mill or bead mill, as the pigment dispersing apparatus in the field of printing inks.

Further, as regards pigment dispersing apparatus for use in the field of ink jet recoding liquids, Japanese Kokai Publication Hei-06-279718 discloses the technology of using the above-mentioned mill type dispersing apparatus and, in addition, Japanese Kokai Publication Hei-08-30158 discloses the technology of utilizing a Micro-Fluidizer (product of Microfluidics,Inc; mainly causing liquid-wall collisions) or a Nanomizer (product of Nanomizer Co.; causing liquid-wall and liquid-liquid collisions) and, further, Japanese Kokai Publication Hei-10-36738 discloses the technology of utilizing an Ultimizer (product of Sugino Machine Ltd.; an improved version of the high-pressure emulsifier mentioned above; causing liquid-liquid collisions of ultrahigh speed fluids with each other) or a like high-pressure emulsifier.

However, the methods of dispersing pigments by such impact forces cannot exert a uniform dispersion force on pigment particles and, therefore, they give pigment dispersions containing coarse particles remaining undispersed and excessively ground very fine particles and thus having a wide particle size distribution.

Since it is difficult to disperse pigments having a hydrophilic surface in aqueous media, in particular, coarse particles precipitate and very fine particles undergo aggregation and, therefore, no good fluidity or sharp color manifesting ability can be obtained.

SUMMARY OF THE INVENTION

It is an object of the present invention to provide a method of producing pigment dispersions which can be suitably used in the fields where higher levels of color manifesting ability and fluidity are required, such as in ink jet recording liquids or color filter coloring compositions, and in which pigments are dispersed to such a finer particle size that renders them applicable in the field of printing inks or the like as well and, further, which show very good pigment dispersion stability even after the lapse of time.

In the course of their investigations made in order to accomplish such an object as mentioned above, the present inventors found that, on account of their mechanical limits, the pigment dispersing apparatus currently in use cannot disperse pigment particles so finely and stably that they can be applied in preparing ink jet recording liquids or color filter coloring compositions. They thus found that a novel method of dispersion must be used.

Thus, the present invention provides (1) a method of producing aqueous pigment dispersions which comprises a mixture comprising a pigment, at least one species selected from the group consisting of polymeric emulsifiers having an HLB value of not less than 5 and surfactants having an HLB value of not less than 5, and an aqueous medium passing through an orifice having neither curves nor bends under pressure and, further, ejecting said mixture into that preceding portion of the mixture which has been ejected and is retained in a hollow member larger in diameter than the orifice to thereby attain dispersion of the pigment in the aqueous medium.

Further, the present invention relates to (2) a method of producing aqueous pigment dispersions as defined above under (1), wherein said polymeric emulsifier has a weight average molecular weight of 1,000 to 1,000,000.

Further, the present invention relates to (3) a method of producing aqueous pigment dispersions as defined above under (1) or (2), wherein use is made, as said polymeric emulsifier, of a polymeric emulsifier having a hydrophobic moiety and a hydrophilic moiety within the molecule, said hydrophobic moiety comprising at least one species selected from the group consisting of saturated cyclic hydrocarbon groups, unsaturated cyclic hydrocarbon groups, and alkyl groups containing not less than 4 carbon atoms, and said hydrophilic moiety comprising at least one species selected from the group consisting of carboxyl, sulfonic acid, and phosphoric acid groups.

Further, the present invention relates to (4) a method of producing aqueous pigment dispersions as defined above under any of (1) to (3), wherein use is made, as said polymeric emulsifier, of a copolymer obtained by copolymerizing a hydrophobic group-containing radical-polymerizable monomer(s) and a hydrophilic group-containing radical-polymerizable monomer (s) under the conditions defined below under A and B, or of a copolymer obtained by copolymerizing a hydrophobic group-containing radical-polymerizable monomer(s), a hydrophilic group-containing radical-polymerizable monomer(s) and another radical-polymerizable monomer (s) under the conditions defined below under A and B, said hydrophobic group-containing radical-polymerizable monomer(s) comprising at least one species selected from the group consisting of alicyclic radical-polymerizable monomers, aromatic radical-polymerizable monomers, and radical-polymerizable monomers having, within the molecule, an alkyl group containing not less than 4 carbon atoms, and said hydrophilic group-containing radical-polymerizable monomer (s) comprising at least one species having a carboxyl group within the molecule.

Condition A: The total amount of the hydrophobic group-containing radical-polymerizable monomers is 10 to 70 mole percent relative to all the radical-polymerizable monomers.

Condition B: The total amount of the hydrophilic group-containing radical-polymerizable monomers is such that the copolymer obtained by copolymerizing all the radical-polymerizable monomers has an acid value of 50 to 250 mg KOH/g.

Further, the present invention relates to (5) a method of producing aqueous pigment dispersions as defined above under any of (1) to (4), wherein use is made, as said polymeric emulsifier, of a copolymer obtained by polymerizing a hydrophobic group-containing radical-polymerizable monomer(s) and a hydrophilic group-containing radical-polymerizable monomer(s), or of a copolymer obtained by polymerizing a hydrophobic group-containing radical-polymerizable monomer(s), a hydrophilic group-containing radical-polymerizable monomer (s) and another radical-polymerizable monomer(s), said hydrophobic group-containing radical-polymerizable monomer (s) comprising at least one species selected from the group consisting of styrene, styrene derivatives, aromatic (meth) acrylic monomers, alicyclic (meth)acrylic monomers and (meth)acrylic monomers having an alkyl group containing not less than 4 carbon atoms, and said hydrophilic group-containing radical-polymerizable monomer(s) comprising at least one species selected from the group consisting of (meth) acrylic acid, itaconic acid, crotonic acid, and maleic acid (anhydride).

Further, the present invention relates to (6) a method of producing aqueous pigment dispersions as defined above under (1) or (2), wherein use is made, as said polymeric emulsifier, of at least one polymeric emulsifier selected from the group consisting of polyurethane compounds and polyester compounds.

Further, the present invention relates to (7) a method of producing aqueous pigment dispersions as defined above under (1), wherein use is made, as said surfactant, of a surfactant having, within the molecule, a saturated cyclic hydrocarbon group or unsaturated cyclic hydrocarbon group and a hydrophilic moiety.

Further, the present invention relates to (8) a method of producing aqueous pigment dispersions as defined above under any of (1) to (7), wherein said polymeric emulsifier and/or surfactant occurs in said aqueous medium in an amount not smaller than that corresponding to the critical micelle concentration.

Further, the present invention relates to (9) a method of producing aqueous pigment dispersions as defined above under any of (1) to (8), wherein a surface-treated pigment is used as said pigment.

Further, the present invention relates to (10) a method of producing aqueous pigment dispersions as defined above under any of (1) to (9), wherein said mixture is passed through the orifice at a speed of 100 to 1,000 m/sec.

Further, the present invention relates to (11) a method of producing aqueous pigment dispersions as defined above under any of (1) to (10) , wherein an orifice having a diameter of 0.01 to 1.5 mm is used as said orifice.

Further, the present invention relates to (12) a method of producing aqueous pigment dispersions as defined above under any of (1) to (11), wherein pigment dispersion is effected in a manner such that the preceding stream of the mixture comprising the pigment, at least one species selected from the group consisting of said polymeric emulsifiers and surfactants, and the aqueous medium which has passed through the orifice and is retained in the hollow member and directed toward the eject opening comes into contact, in the hollow member in a countercurrent manner in the direction of ejecting, with the succeeding stream of the mixture comprising the pigment, at least one species selected from the group consisting of said polymeric emulsifiers and surfactants, and the aqueous medium which has just passed through the orifice.

Further, the present invention relates to (13) a method of producing aqueous pigment dispersions as defined above under any of (1) to (12), wherein said mixture is subjected to premixing treatment in a media-free type mixing apparatus and then passed through said orifice.

Further, the present invention relates to (14) an aqueous pigment dispersion as produced by the method of producing aqueous pigment dispersions as defined above under any of (1) to (13).

In the expressions used herein, "a, b and at least one species selected from the group consisting of c and d" means "① a, ② b and ③ at least one species selected from the group consisting of (c + d)" and, on the other hand, "at least one species selected from the group consisting of a, b, c and d" means "① at least one species selected from the group consisting of (a + b + c + d)".

For example, referring to (1) above, "a mixture containing a pigment, at least one species selected from the group consisting of polymeric emulsifier having an HLB value of not less than 5 and surfactants having an HLB value of not less than 5, and an aqueous medium" means "a mixture containing ① a pigment, ② at least one species selected from the group consisting of (polymeric emulsifiers having an HLB value of not less than 5 + surfactants having an HLB value of not less than 5) and ③ an aqueous medium".

Referring to (3) above, "said hydrophobic moiety comprising at least one species selected from the group consisting of saturated cyclic hydrocarbon groups, unsaturated cyclic hydrocarbon groups, and alkyl groups containing not less than 4 carbon atoms" means "said hydrophobic moiety comprising ① at least one species selected from the group consisting of (saturated cyclic hydrocarbon groups + unsaturated cyclic hydrocarbon groups + alkyl groups containing not less than 4 carbon atoms".

DISCLOSURE OF THE INVENTION

<Working>

Before specifically describing the present invention, mention is made of the manner of dispersion of pigments in aqueous media, the problems which the existing pigment dispersing apparatus has, and the effects of the present invention.

<Mechanisms of pigment dispersion>

In the step of its production, a pigment is formed in the form of fine primary particles. In the steps of drying and so forth, however, they form aggregates. Therefore, for obtaining a sharp hue as well as fluidity, it is necessary to disperse them again into fine particles.

Theoretically, it is possible here to disperse a pigment uniformly to a size close to the primary particle diameter by effecting dispersion thereof under mild conditions by exerting a force slightly greater than the force for forming pigment aggregates (aggregative force) for a long period of time. On the other hand, a force weaker than the aggregative force cannot disperse the pigment into primary particles but allows undispersed particles (coarse particles) to remain, whereas exertion of an excessively great force results in further breaking of primary particles, hence formation of excessively ground particles (finer particles). Such coarse particles and finer particles cause such problems as mentioned below.

Generally, a pigment higher in specific gravity than the dispersion medium can maintain a dispersed state in the dispersion medium, without precipitation, owing to the energy coming from collisions of dispersion medium molecules with the pigment surface (energy causing Brownian movement), among others. However, the surface area-to-weight ratio (specific surface area) of coarse particles is small and, accordingly, the ratio of the energy against the gravity is small, so that such particles readily precipitate.

On the other hand, finer particles are greater in specific surface area, so that they can be said to hardly precipitate. However, since the pigment particle surface is basically hydrophobic, a force causing pigment particles to contact with one another and thereby reducing the surface area, namely aggregative force; is exerted on such particles in aqueous media, in particular. And, as the particles become finer, the stronger aggregative force is exerted thereon and the maintenance of the dispersion state becomes difficult.

<Problems of the prior dispersers>

In the prior art, media collision type mills in which spherical media are collided with one another, or liquid-wall collision type or liquid-liquid collision type high-pressure emulsifying apparatus have so far been used as the pigment dispersing apparatus. However, the collision of one medium with another occurs at a point in the media collision type mills. Therefore, a strong impact force is exerted on those pigment particles being at the close point of collision whereas a weak impact force is exerted on the pigment particles being at sites remote from the point of collision. In the liquid-wall (liquid) collision type high-pressure emulsifying apparatus, it is impossible to cause pigment particles to uniformly collide with the apparatus wall or with one another. Therefore, both types of the dispersing apparatus have a structural problem in that a uniform impact force (dispersing force) cannot be exerted on the pigment. Thus, presumably, the pigment particles given a weak dispersing force remain as coarse particles without further dispersion and, on the other hand, the pigment particles given a strong dispersing force are excessively ground to give finer particles, resulting in a pigment dispersion in which coarse particles and finer particles occur in admixture and the particles are irregular in diameter and show a wide particle size distribution.

In fact, with ordinary liquid-wall (liquid) collision type high-pressure emulsifying apparatus, it is physically difficult to increase the pigment dispersing force and, therefore, the precipitation of coarse particles increases. With media collision type dispersing apparatus or ultrahigh speed liquid-liquid collision type dispersing apparatus (Altimizer) , on the other hand, the impact force is excessive, so that decreases in fluidity supposedly due to reaggregation of excessively ground particles are observed with the lapse of time. It is considered very difficult, however, to solve such problems in view of the above-mentioned mechanisms of pigment dispersion and the mechanical limits of the apparatus.

<Effects of the present invention>

On the contrary, the pigment dispersing method of the present invention is characterized in that a mixture composed of a pigment, a specific polymeric emulsifier and/or a specific surfactant, and an aqueous medium is passed through an orifice at a high speed and further ejected into a hollow member to thereby attain pigment dispersion.

In such a method, stresses are set up by the shearing action upon passage of the mixture through the orifice, the change in pressure just after passage though the orifice, and the difference in speed from the mixture retained in the hollow member. Since the mixture is a low-viscosity, noncompressible fluid, however, the stresses set up are immediately transmitted to the whole mixture, with the result that the dispersing force is uniformly exerted on the pigment.

In spite of its being a non-collision type dispersion technique, this method can set up stresses sufficient to effect pigment dispersion since the orifice diameter employed is very small as compared with the pipe diameters of the conventional high-pressure emulsifying apparatus. Furthermore, the intensity of the stresses set up can be easily controlled by adjusting the pressure applied to the mixture on the occasion of its passage through the orifice.

Therefore, even when the cohesion force between one primary pigment particle and another and the breaking strength of primary particles are intrinsic in each kind of pigment, the pigment dispersing method of the present invention can exert the optimum dispersing force on the pigment according to that intrinsic strength (aggregative force between a primary particle and another < dispersing force < breaking strength of primary particles). And, owing to these characteristics, the pigment dispersing method of the present invention makes it possible to uniformly disperse the pigment to the size of the primary particles thereof without causing formation of excessively ground particles or undispersed particles.

Furthermore, according to the present invention, a compound having a function of enabling adsorption on the hydrophobic surface of the pigment (hydrophobic moiety) and a function of hydrating with the aqueous medium (hydrophilic moiety) and having an HLB value of not less than 5 is used as a dispersing agent for preventing the pigment from aggregating in addition to the above-mentioned prevention of the formation of excessively ground particles.

Further, since the pigment dispersing apparatus employed according to the present invention is an apparatus originally developed as an emulsifier, it is very highly capable of forming micelles of the above-mentioned compound having an HLB value of not less than 5. Thus, it is considered that it can form more stable micelles in the aqueous medium in the pigment dispersing step as well.

Therefore, while the pigment particles finely dispersed in ordinary media type or other dispersing apparatus, for example such particles having an average particle diameter of less than 100 nm (0.1 μm), readily undergo aggregation owing to the hydrophobic surface newly exposed by pigment dispersion, leading to a decrease in dispersion stability, the pigment particles finely dispersed in the pigment dispersing apparatus used in accordance with the present invention are presumably included immediately in the micelles mentioned above and the hydrophobic surface is thus covered and causes no aggregation even after the lapse of time, with the result that a pigment dispersion excellent in dispersion stability is obtained.

Further, when the polymeric emulsifier or the surfactant, having a hydrophobic moiety and a hydrophilic moiety in the range defined herein as appropriate, is selected, the thermodynamic stabilizing effect is further enhanced and the dispersion stability of the pigment is also increased.

Whereas, in aqueous systems, it is very difficult to realize the production of pigment dispersions capable of stably retaining the state of dispersion of fine pigment particles with a uniform particle size distribution, which dispersions are essential for obtaining sharp hues and good fluidity, a method of producing such pigment dispersions has now been established according to the present invention as a result of investigations made from the viewpoint quite different from that of the prior art methods, namely from the viewpoint not only of adjusting the intensity of the force to be applied for pigment dispersion but also of attempting to make the force exerted on the pigment uniform and at the same time utilizing the micelle formation by a polymeric emulsifier or a surfactant to thereby prevent pigment reaggregation after dispersion.

Now, the present invention is described more specifically.

The pigments that can be used in the practice of the present invention are various inorganic pigments and organic pigments commonly used in printing inks and paint compositions. As specific examples of the inorganic pigments, there may be mentioned color pigments such as titanium oxide, iron red oxide, antimony red, cadmium yellow, cobalt blue, prussian blue, ultramarine blue, carbon black, and graphite; and extender pigments such as calcium carbonate, kaolin, clay, barium sulfate, aluminumhydroxide, and talc. Further, as the organic pigments, there may be mentioned soluble azo pigments, insoluble azo pigments, azo lake pigments, condensed azo pigments, copper phthalocyanine pigments, condensed polycyclic pigments, and so forth.

These pigments are preferably subjected in advance to salt milling treatment or any of various surface treatments using a resin, a surfactant or a pigment derivative and, further, they may be admixed with a resin material to give color chips. Preferably, these pigments are each used in an amount of about 0.5 to 50% by mass relative to the whole pigment dispersion.

In accordance with the present invention, use is made of at least one compound selected from the group consisting of polymeric emulsifiers having an HLB value of not less than 5 and surfactants having an HLB value of not less than 5, each having a hydrophilic moiety and a hydrophobic moiety within the molecule, for dispersing such a pigment as mentioned above.

The term "HLB" as used herein indicates the balance between the hydrophilic moiety and lipophilic moiety of the molecule (hydrophile-lipophile balance) as employed in the field of surfactants. It can be said that a compound having a higher HLB value is more hydrophilic. The term "compound having an HLB value of not less than 5" means a compound the HLB value of which as calculated by applying Griffin's formula, which is given below, is not less than 5 as well as a compound the HLB value of which as determined by the experimental technique described hereinbelow corresponds to not less than 5.

[Griffin's formula]

$$\text{HLB} = (100/5) \times \text{hydrophilic group weight}/(\text{hydrophilic group weight} + \text{hydrophobic group weight})$$

The above hydrophilic group includes acid groups such as carboxyl group, sulfonic acid group and phosphoric acid group, basic groups such as amino group, ammonium salts and metal complexes, hydroxyl group, ethylene oxide group and the like. Groups other than these hydrophilic groups are hydrophobic groups. Alkylene oxide groups containing 3 or more carbon atoms are hydrophobic groups.

First, in the case of a nonionic surfactant, the value calculated according to Griffin's formula based on the hydrophilic group weight and hydrophobic group weight, as such, can be applied as the numerical value of HLB.

On the contrary, in the case of ionic surfactants, it is generally said that there is no method of calculating the HLB values thereof since the hydrophilicity of the hydrophilic group is generally much greater as compared with nonionic ones and, further, the level of hydrophilicity per unit weight varies according to the hydrophilic group species (e.g. "Shin Kaimen Kasseizai Nyumon (Introduction to Surfactants, New Edition)", written by Takehiko Fujimoto, published by Sanyo Chemical Industries, Ltd.). However, those ionic surfactants in which the hydrophilicity of the hydrophilic group is much greater as compared with nonionic ones and which have an HLB value greater than 5 as calculated by applying Griffin's formula can at least be said to have an HLB value of not less than 5.

Further, in the above-mentioned "Shin Kaimen Kasseizai Nyumon", there is a description to the fact that U. S. Atlas Company (currently ICI America), paying attention to the fact that the change in emulsifying property is sensitive to the change in HLB, has established a method of experimentally determining HLB values by a standard oil emulsification experiment and has presented it. And, for example, it is described in the cited publication that the HLB of sodium oleate, which is an ionic surfactant, when determined by the above-mentioned experimental method of determining HLB values, corresponds to 18.0.

Since the primary performance characteristic required of the surfactant to be used in the practice of the present invention is the emulsifying property of a surfactant having an HLB value of not less than 5, those ionic surfactants which are recognized, by the above-mentioned method of experimentally determining HLB values, to have an emulsifying property corresponding to an HLB value of not less than 5 are also usable in the practice of the present invention.

Further, for dispersions of surfactants in water, the relationship between the approximate numerical value of HLB and the appearance of the dispersion has also been shown (J. P. Carter, Am. Perfumer & Cosmetic). According to this relationship, the HLB of a surfactant corresponds to 6 to 8 when it gives a milk-like dispersion upon vigorous stirring in water, to 8 to 10 when it gives a stable milk-like dispersion, to 10 to 13 when it gives a semitransparent or transparent dispersion, and to 13 or above when it gives a transparent solution.

Therefore, those surfactants which when added to water, followed by stirring, as an experimental technique as well, give transparent solutions, semitransparent or transparent dispersions or at least milk-like dispersions can be said to have an HLB value of not less than 5 and can be used in the practice of the present invention.

The method of determining the value of HLB according to Griffin's formula or by the experimental technique mentioned above can be applied in the case of polymeric emulsifiers as well.

As the polymeric emulsifier usable in the practice of the present invention, any polymer compound that has a hydrophobic moiety and a hydrophilic moiety within each molecule and has an HLB value of not less than 5 as determined according to Griffin's formula or by experiment may be used, without any restriction.

The polymeric emulsifier may be either ionic or nonionic. Preferred, however, are, in particular, ionic polymeric emulsifiers which comprise, in each molecule, at least one hydrophobic moiety selected from the group consisting of saturated cyclic hydrocarbon groups, unsaturated cyclic hydrocarbon groups, and alkyl groups containing 4 or more carbon atoms and comprise at least one hydrophilic moiety selected from the group consisting of carboxyl, sulfonic acid, phosphoric acid groups (these being preferred acid groups), amino and ammonium salt groups (these being preferred basic groups).

As the polymeric emulsifiers having such a preferred mode, there may be mentioned, among others, copolymer compounds obtained by copolymerizing a radical-polymerizable monomer (s) having such a hydrophobic moiety as mentioned above within the molecule and a radical-polymerizable monomer (s) having such a hydrophilic moiety as mentioned above within the molecule, and polyurethane compounds, polyester compounds, polyamide compounds and the like synthesizable from a reactant component(s) having such a hydrophobic moiety as mentioned above within the molecule and a reactant component(s) having such a hydrophilic moiety as mentioned above within the molecule.

As specific examples of the above-mentioned radical-polymerizable monomer having such a hydrophobic moiety within the molecule that are suited for use in obtaining the above-mentioned copolymer compounds, there may be mentioned alicyclic (meth)acrylates such as cyclohexyl (meth)acrylate and derivatives thereof; radical polymerizable monomers having a saturated cyclic hydrocarbon group, such as vinylcyclohexane and derivatives thereof; aromatic acrylic monomers such as $\alpha$-phenylacrylic acid and derivatives thereof, $\beta$-phenylacrylic acid and derivatives thereof, benzyl (meth)acrylates and derivatives thereof, and naphthyl (meth)acrylates and derivatives thereof; aromatic radical-polymerizable monomers such as styrene and derivatives thereof, and vinylnaphthalene and derivatives thereof; alkyl (meth)acrylate compounds containing not less than 4 carbon atoms, such as butyl (meth)acrylate, hexyl (meth)acrylate, octyl (meth)acrylate, nonyl (meth)acrylate, decyl (meth)acrylate, dodecyl (meth)acrylate, lauryl (meth)acrylate, and stearyl (meth)acrylate; $\alpha$-olefins containing not less than 6 carbon atoms, such as 1-hexene, 1-heptene, 1-octene, 1-nonene, 1-decene, 1-dodecene, 1-tetradecene, 1-hexadecene, 1-octadecene, 1-eicosene, 1-docosene, 1-tetracosene, 1-octacocene, and 1-triacontene; vinyl alkyl ketone compounds containing not less than 4 carbon atoms, such as vinyl butyl ketone and vinyl octyl ketone, and so forth. The total content of these hydrophobic group-containing radical-polymerizable monomers is preferably about 10 to 70 mole percent relative to all the radical-polymerizable monomers.

On the other hand, as suitable examples of the above-mentioned radical-polymerizable monomer having a hydrophilic moiety within the molecule, there may first be mentioned acid group-containing monomers such as (meth) acrylic acid, crotonic acid, maleic anhydride, maleic acid and monoalkyl ester compounds derived therefrom, itaconic acid and monoalkyl ester compounds derived therefrom, citraconic acid and monoalkyl ester compounds derived therefrom, and other carboxyl group-containing unsaturated monomers, 2-acrylamido-2-methyl-1-propanesulfonic acid, 2-methacrylamido-2-methyl-1-propanesulfonic acid, styrenesulfonic acid and other sulfone group-containing unsaturated monomers, acid phosphonyl (meth)acrylate, acid phosphonylethyl (meth)acrylate, and other phosphate group-containing unsaturated monomers, among others.

As basic group-containing unsaturated monomers, on the other hand, there may be mentioned amino group-containing unsaturated monomers such as N-alkylaminoalkyl (meth)acrylates, N-alkylaminoalkyl(meth)acrylamides, N,N-dialkylaminoalkyl (meth)acrylates, and N,N-dialkylaminoalkyl(meth)acrylamides; and ammonium salt group-containing unsaturated monomers such as N,N,N-trimethyl-N-(2-acryloyloxy)ethylammonium chloride, N,N,N-triethyl-N-(2-acryloyloxy)ethylammonium chloride, N,N,N-triethyl-N-(2-acryloyloxy)ethylammonium chloride, N,N,N-trimethyl-N-(3-acryloyloxy)propylammonium chloride, N,N,N-triethyl-N-(3-acryloyloxy)propylammonium chloride, N,N-dimethyl-N-ethyl-N-(2-methacryloyloxy)ethylammonium chloride, and N,N-diethyl-N-methyl-N-(2-methacryloyloxy) ethylammonium chloride.

Also usable are other radical-polymerizable monomers that can be copolymerized, for example ethylene, propylene, alkyl (meth) acrylates whose alkyl moiety contains not more than 3 carbon atoms, hydroxyalkyl (meth) acrylates, (meth)acrylamide, acrylonitrile, ketone compounds having a vinyl group and an alkyl group containing not more than 3 carbon atoms, and ether compounds having a vinyl group and an alkyl group containing not more than 3 carbon atoms.

The polymeric emulsifiers obtained by copolymerization of such materials are anionic polymer emulsifiers comprising, as the hydrophilic group within the molecule, at least one acid group selected from the group consisting of carboxyl, sulfonic acid and phosphoric acid groups, or cationic polymer emulsifiers comprising at least one basic group selected from the group consisting of amino and ammonium salt groups. First, those of them which have an HLB value of not less than 5 as directly calculated according to Griffin's formula can be used.

Further, those of them which give, in water in the presence of a basic compound or acidic compound, which is to be mentioned later herein, milk-like dispersions, semitransparent or transparent dispersions or transparent solutions upon adjustment of the amount of the acidic group or basic group comprised in each molecule can be used as the ones having an HLB value of not less than 5.

And, when the copolymers obtained have an acid value of approximately 50 to 250 mg KOH/g or an amine value of approximately 10 to 100 mg KOH/g, they bring about, in water, such a state as mentioned above and can be used as the polymeric emulsifiers.

Preferred as the hydrophobic group-containing radical-polymerizable monomers among the radical-polymerizable monomers mentioned above are alicyclic acrylic monomers, aromatic acrylic monomers, styrene and derivatives thereof, (meth)acrylic monomers having an alkyl group containing not less than 4 carbon atoms; whereas preferred hydrophilic group-containing radical-polymerizable monomers are acid group-containing unsaturated monomers, in particular carboxyl group-containing unsaturated monomers, among others.

Then, usable as the above-mentioned polyurethane resins having a hydrophobic moiety and a hydrophilic moiety within the molecule are polyurethane resins obtained by synthesizing urethane prepolymers by reacting an organic diisocyanate compound(s) with a high-molecular-weight diol compound(s), followed by reaction with a chain extender and/or a reaction terminator. For example, usable as the material having a hydrophobic moiety within the molecule are aromatic diisocyanates such as toluylene diisocyanate, xylylene diisocyanate, diphenylmethanediisocyanate and tetramethylxylylene diisocyanate; alicyclic diisocyanate compounds such as isophoronediisocyanate and cyclohexenediisocyanate; high-molecular-weight polyester diol compounds obtained by reacting phthalic acid with a glycol; bisphenol and like aromatic chain extenders; isophoronediamine and like alicyclic chain extenders, and the like.

Usable as the material having a hydrophilic moiety within the molecule are carboxyl group-containing high-molecular-weight polyester diol compounds obtained by reacting a carboxyl group-containing diol such as dimethylolpropionic acid with a dibasic acid; carboxyl group-containing high-molecular-weight polyester diol compounds obtained by reacting a polyalkylene glycol with pyromellitic anhydride; sulfonic acid group-containing high-molecular-weight polyester diol compounds obtained by reacting a sulfone group-containing dicarboxylic acid such as sulfoterephthalic acid, 5-sulfoisophthalic acid, 4-sulfophthalic acid, 4-sulfonaphthalene-2,7-dicarboxylic acid or 5- (4-sulfophenoxy) isophthalic acid with a polyalkylene glycol; phosphoric acid group-containing high-molecular-weight polyester diol compounds obtained by combinedly using at least one of phosphoric acid, pyrophosphoric acid, polyphosphoric acid and phosphorous acid in the course of reaction of a polyhydric alcohol compound(s) with a polybasic carboxylic acid compound(s), carboxyl group-containing diol type chain extenders, and so forth.

Next, as the above-mentioned polyester resins having a hydrophobic moiety and a hydrophilic moiety within the molecule, there may be mentioned first of all carboxyl group-containing polyester resins obtained by reacting a polyacid carboxylic acid with a polyhydric alcohol under carboxyl group excess conditions and utilizing an aromatic or alicyclic compound as either of the polyacid carboxylic acid and polyhydric alcohol.

As specific examples of the polyacid carboxylic acid, there may be mentioned, among others, such aromatic compounds as terephthalic acid, isophthalic acid, orthophthalic acid, 1,5-naphthalenedicarboxylic acid, 2,6-naphthalenedicarboxylic acid, diphenic acid, p-oxybenzoic acid, and p-hydroxyethoxybenzoic acid, such alicyclic dicarboxylic acids as hexahydrophthalic acid, and tetrahydrophthalic acid, and such aliphatic dicarboxylic acids as succinic acid, adipic acid, azelaic acid, sebacic acid, dodecanedicarboxylic acid, fumaric acid, maleic acid, and itaconic acid.

On the other hand, the polyhydric alcohol includes, among others, such aromatic compounds as paraxylene glycol, metaxylene glycol, orthoxylene glycol, and 1,4-phenylene glycol, such alicyclic compounds as 1,4-cyclohexanediol, 1,4-cyclohexanedimethanol, spiroglycol, hydrogenated bisphenol A, tricyclodecane, and tricyclodecanedimethanol, and such aliphatic compounds as ethylene glycol, propylene glycol, butylene glycol, polyethylene glycol, other dialcohols, trimethylolethane, glycerol, pentaerythritol, and other at least trihydric polyhydric alcohols.

It is also possible to obtain polyester resins having an appropriate acid value by first reacting the above-mentioned dicarboxylic acid and dialcohol in hydroxyl group excess and then reacting the molecular termini with at least trivalent polyacid carboxylic acid such as trimellitic acid, trimesic acid, or pyromellitic acid.

As the sulfone group-containing polyester resins, there may be mentioned sulfone group-containing polyester resins obtained by using a sulfone group-containing dicarboxylic acid, such as sulfoterephthalic acid, 5-sulfoisophthalic acid, 4-sulfophthalic acid, 4-sulfonaphthalene-2,7-dicarboxylic acid, or 5-(4-sulfophenoxy)isophthalic acid, or a metal salt or ammonium salt thereof, and a polyhydric alcohol.

Further, the phosphoric acid group-containing polyester resins can be obtained by combinedly using at least one of phosphoric acid, pyrophosphoric acid, polyphosphoric acid and phosphorous acid in the process of reaction between the above-mentioned polyhydric alcohol compound(s) and polyacid carboxylic acid compound(s).

The polyurethane resins and polyester resins obtained by synthesis from these materials are anionic polymer emulsifiers comprising at least one acidic group selected from among carboxyl, sulfonic acid and phosphoric acid groups as the hydrophilic group within the molecule and, first of all, those of them which have an HLB value of not less than 5 as calculated according to Griffin's formula can be used.

Further, those of them which give, in water in the presence of a basic compound, milk-like dispersions, semitransparent or transparent dispersions or transparent solutions upon adjustment of the amount of the acidic group(s) comprised in each molecule can be used as the ones having an HLB value of not less than 5.

And, when the above-mentioned polyurethane resins or polyester resins obtained have an acid value of approximately 10 to 100 mg KOH/g, they bring about, in water, such a state as mentioned above and can be used as the polymeric emulsifiers.

In the practice of the present invention, water-soluble polymers having a hydroxyl group(s) or nonionic nitrogen-comprising group(s) within the molecule can further be used as the polymeric emulsifiers and, for example, polyvinyl alcohol, polyvinylpyrrolidone, polyacrylamide, water-soluble cellulose and the like may be mentioned as nonionic polymer emulsifiers.

The above-mentioned polymeric emulsifiers have a weight average molecular weight of 1,000 to 1,000,000, preferably about 5, 000 to 100, 000. Polymeric emulsifiers having a weight average molecular weight below the above-mentioned range will be low in the effect of stably dispersing fine pigment particles, whereas it is difficult to stably maintain the viscosity of each aqueous pigment dispersion for a long period of time with ones having a weight average molecular weight above-mentioned the above range.

Generally, many of such polymeric emulsifiers can form pigment-containing micelles resulting from pigment inclusion in micelles constituted of one to several molecules of each emulsifier. Such pigment-containing micelles form a thick adsorption layer of the polymeric emulsifier on the pigment surface owing to a pigment-polymeric emulsifier interaction and are expected to produce a higher effect in stabilizing the pigment dispersion in an aqueous medium.

Further, in the practice of the present invention, surfactants having an HLB value of not less than 5 can also be used singly or in combination with the above-mentioned polymeric emulsifiers. As examples of such surfactants, there may be mentioned first of all nonionic ones such as octylphenol-ethylene oxide (4 to 40 moles) adducts (HLB = 9.6 to 17.9), octylnonylphenol-ethylene oxide (2 to 70 moles) adducts (HLB = 5.7 to 18.7), and the like.

Further, as higher alcohol-ethylene oxide adducts, there may be mentioned, for example, such commercial products (trademarks) as Sanyo Chemical Industries' Elmamin 40 (HLB = 8.0), Elmamin 50 (HLB = 9.0), Elmamin 60 (HLB = 10.2), Elmamin 70 (HLB = 10.8), and Elmamin 110 (HLB = 13.2) and, as higher fatty acid-ethylene oxide adducts, there may be mentioned, for example, such commercial products (trademarks) as Sanyo Chemical Industries' Ionet MS-400 (HLB = 11.9), Ionet MS-1000 (HLB = 15.7), Ionet MO-200 (HLB = 8.4), and Ionet MO-400 (HLB = 11.8).

Usable as ionic surfactants, on the other hand, are higher fatty acid metal salts such as potassium oleate (HLB = 20.0) and sodium oleate (HLB = 18.0); higher alcohol sulfate ester metal salts such as sodium lauryl sulfate ester(HLB = ca 40); like various anionic surfactants capable of forming salts with metals and, further, amino group-containing compounds, ammonium salt group-containing compounds, compounds in metal complex form, and various other cationic surfactants.

Among these surfactants, nonionic or ionic surfactants having, within the molecule, a saturated cyclic hydrocarbon group(s) or unsaturated cyclic hydrocarbon group(s) and a hydrophilic moiety(s) can be suitably used from the pigment dispersion stability viewpoint.

The content of these polymeric emulsifiers and/or surfactants is preferably not smaller than the critical micelle concentration in the aqueous medium and the content of them is preferably increased with the increase in pigment content. The content in question is preferably about 0.1 to 40.0% by mass relative to the whole pigment dispersion (mixture) or about 5 to 100% by mass relative to the pigment.

Then, the aqueous medium to be used in the practice of the present invention may comprise water alone or may comprise a basic compound(s) necessary for emulsifying the above-mentioned anionic polymer emulsifiers or an acidic compound(s) necessary for emulsifying the above-mentioned cationic polymer emulsifiers, if necessary together with a water-miscible organic solvent(s).

First, as the basic compound that can be used in the practice of the present invention, there may be mentioned inorganic basic compounds such as ammonium hydroxide; and organic basic compounds such as triethylamine, monoethanolamine and triethanolamine; and, as the acidic compound, there may be mentioned hydrochloric acid, sulfuric acid and acetic acid, among others. These basic compounds or acidic compounds are used in an amount within the range within which the micelle formation of the polymeric emulsifiers is stabilized. Generally, an amount of about 80 to 120 mole percent of the neutralization equivalent to the polymeric emulsifiers is appropriate.

As the organic solvent to be added where necessary, there may be mentioned lower alcohols such as methanol, ethanol and propanol, and (poly)alkylene glycols, such as (poly)ethylene glycol and (poly)propylene glycol, and alkyl ethers thereof, among others.

In the aqueous pigment dispersion according to the present invention, there may be further incorporated, if necessary, one or more of various additives such as pigment dispersing auxiliaries, viscosity modifiers and defoaming agents.

Now, a method of producing aqueous pigment dispersions using the above-mentioned materials is described.

Such a method is nothing but one of preferred embodiments of the present invention and is by no means limitative of the scope of the present invention.

First, a pigment dispersing apparatus to be used for pigment dispersion in the practice of the present invention is described.

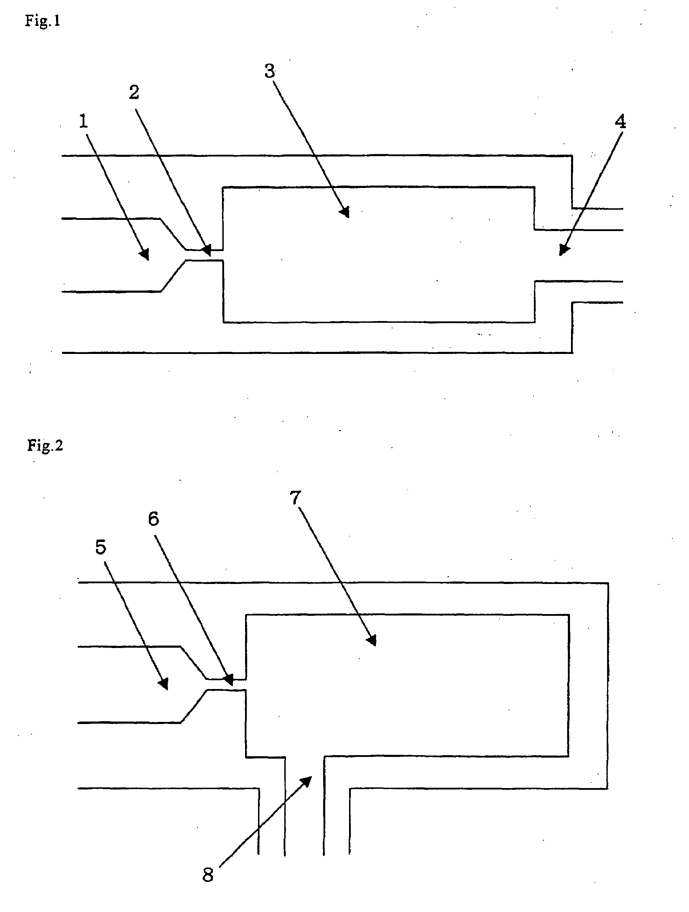

The pigment dispersing apparatus to be used in the practice of the invention is an ultrahigh speed emulsifying apparatus constituted of a fluid pressurizing portion 1, an orifice 2 and a hollow member 3 as disposed in parallel, as schematically shown in Fig. 1. In this apparatus, a fluid such as a solid-liquid mixture or liquid-liquid mixture is introduced into the pressurizing portion 1 through a hopper (not shown) using a pressure pump (not shown), for instance. Generally, the fluid is pressurized to $5 \times 10^3$ to $3.2 \times 10^5$ kPa and then passed through the orifice 2 having a diameter of 0.01 to 1.5 mm and having neither a curve nor a bent at a high speed. On that occasion, the speed at which the fluid is passed through the orifice is preferably 100 to 1,000 m/sec, more preferably 300 to 700 m/sec, and optimum stresses on the fluid within the orifice can be set up, for obtaining a uniform and fine solid-liquid mixture or liquid-liquid mixture, by adjusting the orifice diameter and the speed at which the fluid passes through the orifice.

Furthermore, the high-speed jet stream of the fluid as generated by the passage through the orifice 2 is ejected into the hollow member 3 to thereby cause emulsification or dispersion of the fluid owing to shearing stresses set up by the difference in speed between the fluid just ejected into the hollow member 3 and preceding portion of the fluid which has been ejected previously and is retained in the hollow member 3. The hollow member preferably has a cylindrical form. For making a speed difference appropriate for the fluid portions mentioned above exerting shearing stresses on each other, the orifice diameter-to-hollow member pipe diameter ratio is preferably 1:(2 to 50), more preferably about 1: (5 to 10) , and the hollow member desirably has a sufficient volume for preventing the high-speed jet stream from colliding against the counter face of the hollow member with great force.

Further, in operating this pigment dispersing apparatus, either the method comprising ejecting the emulsified or dispersed fluid obtained through a eject opening 4 disposed on the hollow member wall opposed to the orifice or the method comprising causing the fluid after passing through the orifice 6 at a high speed from the pressurizing portion 5 to go to the wall of the hollow member 7 as opposed to the orifice and back and ejecting the fluid through a eject opening 8 disposed in the vicinity of the orifice, as schematically illustrated in Fig. 2, can be used. Among them, the method comprising causing the fluid to go to the wall opposed to the orifice and back (Fig. 2) brings the mixture stream after passage through the orifice that is retained in the hollow member and is directing toward the eject opening 8 (way back) and the succeeding mixture portion that has just passed through the orifice and is running in the direction of ejecting (way to) into contact in a countercurrent manner and, therefore, can set up higher shearing stresses as well. Furthermore, it is also possible to control the rate of flow of the mixture in the hollow member by applying a back pressure from the eject opening 4 or 8.

In producing the pigment dispersion of the present invention using such a pigment dispersing apparatus, the surfactant such as the above-mentioned pigment or the polymeric emulsifier and the aqueous medium are subjected to premixing treatment using a predispersing apparatus using no media, such as a high-speed mixer or high-pressure homogenizer.

The mixture after this premixing treatment (premixed mixture) is charged into the pressuring portion of the dispersing apparatus using a pressure pump and pressurized so that the mixture passing through the orifice may preferably attain a speed of 400 to 1,000 m/sec. Further, the pigment is finely dispersed by stresses exerted on the occasion of the mixture flowing out into the hollow member under simultaneous formation of polymeric emulsifier micelles for inclusion of fine pigment particles in the micelles.

For example, when the orifice diameter is 0.15 mm and the hollow member has a pipe diameter of 1 mm, the premixed mixture whose viscosity is preferably adjusted to less than 1 Pa·sec, more preferably less than 0.5 Pa·sec, still more preferably less than 0.2 Pa·sec, is pressurized to about $8 \times 10^4$ to $2 \times 10^5$ kPa and passed through the orifice at a flow rate of 400 to 800 m/sec so that shearing stresses and stresses resulting from pressure changes may be exerted on the pigment. The pressure to be applied to the premixed mixture is preferably adjusted so that the stresses exerted on the pigment may fall within the range of from the aggregative force between one primary pigment particle and another to the breaking strength of the primary particles.

Further, in the next process, the jet stream of the premixed mixture that has passed through the orifice is ejected into the preceding portion of the premixed mixture as ejected from the orifice and retained in the hollow member. When the speed of the succeeding portion of the mixture at the time of collision against the wall opposed to the orifice is preferably controlled so as to become approximately zero, shearing stresses are generated according to speed differences, whereby a further dispersing force is exerted on the pigment. On the other hand, it is also possible to cause the preceding portion of the premixed mixture as passed through the orifice and retained in the hollow member and the succeeding portion of the mixture as just passed through the orifice to come into contact in a countercurrent manner. In this case, higher stresses are exerted on the pigment within the hollow member, and this is advantageous in dispersing a pigment showing a stronger aggregative force among primary particles.

The pigment dispersion obtained by pigment dispersing according to such a method may further be subjected to post-treatment, such as centrifugation or filter treatment, to remove coarse particles.

As described hereinabove, when the aqueous pigment dispersion producing method of the present invention is used, the pigment is dispersed by uniform and controlled stresses and it is thus possible to uniformly disperse the pigment to or close to the size of fine primary particles, without generating excessively ground particles or undispersed particles. In addition, the pigment particles finely dispersed will not aggregate with the lapse of time and, thus, the aqueous pigment dispersion obtained shows very good dispersion stability.

In particular when the pigment occurs as fine particles with an average particle diameter smaller than 100 nm, the apparatus is very highly effective and makes it possible to obtain pigment dispersions having very good dispersion stability that can never have been produced by the conventional dispersing apparatus.

Thus, the aqueous pigment dispersion obtained by the aqueous pigment dispersion producing method of the present invention also constitutes an aspect of the present invention.

BRIEF DESCRIPTION OF THE DRAWINGS

Fig. 1 is a schematic representation of a pigment dispersing apparatus usable in the practice of the present invention.

Fig. 2 is a schematic representation of another pigment dispersing apparatus usable in the practice of the present invention.

Explanation of Symbols

1, 5 - each a liquid pressurizing portion;
2, 6 - each an orifice;
3, 7 - each a hollow member;
4, 8 - each a eject opening.

BEST MODE FOR CARRYING OUT THE INVENTION

The following examples illustrate the present invention more specifically. These examples are, however, by no means limitative of the scope of the present invention. Unless otherwise specified, "part(s)" and "%" represent "part (s) by weight" and "% by mass", respectively.

1. Preparation of polymeric emulsifier-containing aqueous media

1-1) Preparation of polymeric emulsifiers

Production Example 1

A four-necked flask equipped with a stirrer, condenser and nitrogen gas inlet tube was charged with 350 parts of butyl acetate. This was heated to 105°C and, while nitrogen gas was introduced into the flask, a mixture composed of 31 parts of methacrylic acid, 129 parts of methyl methacrylate, 40 parts of stearyl methacrylate and 5 parts of benzoyl peroxide as an initiator was added dropwise over 2 hours and, further, the same temperature was maintained for 2 hours for effecting copolymerization. The butyl acetate was then distilled off to give an acrylic copolymer type polymeric emulsifier (A) with a weight average molecular weight of 11,000 and an acid value of 100 mg KOH/g.

Production Example 2

A four-necked flask equipped with a stirrer, condenser and nitrogen gas inlet tube was charged with 350 parts of butyl acetate. This was heated to 105°C and, while nitrogen gas was introduced into the flask, a mixture composed of 31 parts of methacrylic acid, 129 parts of methyl methacrylate, 40 parts of styrene and 5 parts of benzoyl peroxide as an initiator was added dropwise over 2 hours and, further, the same temperature was maintained for 2 hours for effecting copolymerization. The butyl acetate was then distilled off to give a styrene-acrylic copolymer type polymeric emulsifier (B) with a weight average molecular weight of 23,000 and an acid value of 100 mg KOH/g.

Production Example 3

A four-necked flask equipped with a stirrer, condenser and nitrogen gas inlet tube was charged with 350 parts of butyl acetate. This was heated to 105°C and, while nitrogen gas was introduced into the flask, a mixture composed of 80 parts of styrene, 120 parts of monobutyl maleate and 5 parts of benzoyl peroxide as an initiator was added dropwise over 2 hours and, further, the same temperature was maintained for 2 hours for effecting copolymerization. The butyl acetate was then distilled off to give a styrene-maleic acid copolymer type polymeric emulsifier (C) with a weight average molecular weight of 27,000 and an acid value of 245 mg KOH/g.

1-2) Polymeric emulsifier-aqueous medium blending

The polymeric emulsifier A (30 parts) was added to 70 parts of an aqueous basic compound solution comprising monoethanolamine in an amount corresponding to the neutralizing amount, and the mixture was heated at 70°C and stirred with a high-speed mixer to effect dispersion to give a polymeric emulsifier-containing aqueous medium (A) with a solid content of 30%. Further, a polymeric emulsifier-containing aqueous medium (B) with a solid content of 30% was prepared following the same procedure with the polymeric emulsifier B, and a polymeric emulsifier-containing aqueous medium (C) with a solid content of 30% following the same procedure with the polymeric emulsifier C. The polymeric emulsifiers A and B each showed a semitransparent dispersion state in the aqueous medium, and the polymeric emulsifier C showed a transparent solution state in the aqueous medium.

2) Production of a polyurethane type polymeric emulsifier-containing aqueous medium

A four-necked flask equipped with a stirrer, condenser and nitrogen gas inlet tube was charged with 200 parts of polyethylene glycol with an average molecular weight of 1,000 and 88.8 parts of isophoronediisocyanate and, while nitrogen gas was introduced into the flask, the reaction was carried out at 100-105°C for 6 hours. Then, 24.1 parts of dimethylolpropionic acid was added as a chain extender, and the reaction was carried out at 100-105°C for 5 hours.
After cooling, 209 parts of diethylene glycol, 487 parts of water and 19.6 parts of triethylamine as a neutralizing agent were added, the resulting mixture was stirred to attain homogeneity, 2.5 parts of monoethanolamine was added as a reaction terminator, the mixture was stirred at 30°C for 1 hour to give a polyurethane type polymeric emulsifier-containing aqueous medium (D) (solid content 30%) having a saturated hydrocarbon ring as a hydrophobic moiety and a carboxyl group as a hydrophilic moiety with an acid value of 32 mg KOH/g and a weight average molecularweight of 26, 000. The polyurethane type polymeric emulsifier showed a transparent dispersion state in the aqueous medium.

2. Production of pigment dispersions

Pigment-polymeric emulsifier-aqueous medium mixtures (A to H) and pigment-surfactant-aqueous medium mixtures (I to L) were prepared by subjecting the respective formulations specified in Table 1 to premixing treatment by stirring with a high-speed stirrer.
The above mixtures A to D, I and J were each passed through an orifice at a flow rate of 600 m/sec under a pressure of $2 \times 10^5$ kPa using a dispersing apparatus having an orifice diameter of 0.15 mm and a hollow member pipe diameter of 1 mm to be ejected into that portion of the mixture which had previously been ejected and was retained in the hollow member. After 5 such passes, there were obtained dispersions of Examples 1 to 6.
Further, a bead mill (capacity 1.4 L, product of Willy A. Bachofen AG.) was filled with steel beads with a grain diameter of 1 mm to an extent of filling of 60% by volume. The above-mentioned mixtures E to H, K and L were each stirred at a stirring plate peripheral speed of 14 m/sec to attain dispersion, followed by two-fold (by weight) dilution with water to give dispersions of Comparative Examples 1 to 6.
Furthermore, the above-mentioned mixtures A to D, I and J were each passed through a Nanomizer mill (product of Nanomizer Inc.) under a pressure of $5 \times 10^4$ kPa. The number of passes was 5. Dispersions of Comparative Examples 7 to 12 were thus obtained.

The materials used this time were as follows:

Pigment: Phthalocyanine pigment (Lionoble Blue 7330, product of Toyo Ink MFG Co., Ltd.)

Surfactant A: Nonylphenol-ethylene oxide (8-9 moles) adduct (Nonipol 80, HLB = 12. 6, product of Sanyo Chemical Industries, Ltd.)

Surfactant B: Ethylene glycol-ethylene oxide/propylene oxide adduct (Newpol PE-68, HLB = 14.0, product of Sanyo Chemical Industries, Ltd.)

defoaming agent: KM 70 (product of Shin-Etsu Chemical Co., Ltd.).

Table 1

| | Mixture | A | B | C | D | E | F | G | H | I | J | K | L | M |
|---|---|---|---|---|---|---|---|---|---|---|---|---|---|---|
| Formulation | Pigment | 10.0 | 10.0 | 10.0 | 10.0 | 10.0 | 10.0 | 10.0 | 10.0 | 10.0 | 10.0 | 10.0 | 10.0 | 10.0 |
| | Dispersion medium A | 6.6 | – | – | – | 6.6 | – | – | – | – | – | – | – | – |
| | Dispersion medium B | – | 6.6 | – | – | – | 6.6 | – | – | – | – | – | – | – |
| | Dispersion medium C | – | – | 6.6 | – | – | – | 6.6 | – | – | – | – | – | – |
| | Dispersion medium D | – | – | – | 6.6 | – | – | – | 6.6 | – | – | – | – | – |
| | Surfactant A | – | – | – | – | – | – | – | – | 2.0 | – | – | 2.0 | – |
| | Surfactant B | – | – | – | – | – | – | – | – | – | 2.0 | – | – | 2.0 |
| | Surfactant C | – | – | – | – | – | – | – | – | – | – | 2.0 | – | – |
| | Defoaming agent | 0.1 | 0.1 | 0.1 | 0.1 | 0.1 | 0.1 | 0.1 | 0.1 | 0.1 | 0.1 | 0.1 | 0.1 | 0.1 |
| | Water | 83.3 | 83.3 | 83.3 | 83.3 | 33.3 | 33.3 | 33.3 | 33.3 | 83.3 | 83.3 | 83.3 | 33.3 | 33.3 |

3. Evaluation results

The aqueous pigment dispersions obtained in Examples 1 to 6 and Comparative Examples 1 to 12 as obtained by the method mentioned above were evaluated for average pigment diameter, occurrence or nonoccurrence of pigment precipitation, changes in fluidity with time, and color manifesting ability by the evaluation methods mentioned below. The results are shown in Table 2.

Average pigment particle size measurement

The pigment dispersions of Examples 1 to 6 and Comparative Examples 1 to 12 were measured for average particle diameter using a light scattering-based particle size distribution meter (MICROTRAC UPA: MODEL 9340-UPA, product of Nikkiso Co., Ltd.)

A: Average particle diameter not larger than 0.10 µm;
B: Average particle diameter exceeding 0.10 µm but not larger than 0.15 µm;
C: Average particle diameter exceeding 0.15 µm but not larger than 0.20 µm;
D: Average particle diameter exceeding 0.20 µm.

Pigment particle size distribution

The pigment dispersions of Examples 1 to 6 and Comparative Examples 1 to 12 were measured for pigment particle size distribution using the above-mentioned measuring apparatus. When the ratio (%) of the weight of pigment particles having a particle diameter within the range of from half the average particle diameter to 1.5 times the average particle diameter to the total weight of the pigment was greater, the particle size distribution was judged to be narrower.

A: The above-mentioned ratio exceeding 80%;
B: The above-mentioned ratio not higher than 80% but exceeding 70%;
C: The above-mentioned ratio not higher than 70% but exceeding 60%;
D: The above-mentioned ratio not higher than 60%.

Confirmation of occurrence or nonoccurrence of precipitation

The pigment dispersions of Examples 1 to 6 and Comparative Examples 1 to 12 were each sampled in a glass bottle. The bottle was tightly stoppered and stored at 60°C for 10 days, and the storage stability was evaluated based on the presence or absence of a precipitate.

A: No precipitate at all;
B: A slight amount of precipitate;
C: A large amount of precipitate, hence poor practicability.

Change in fluidity with time

The pigment dispersions of Examples 1 to 6 and Comparative Examples 1 to 12 were each evaluated for change in fluidity with time based on the ratio between the viscosity just after preparation (initial viscosity) and the viscosity after 7 days of storage in an ambient temperature of 40°C (viscosity after storage).
Viscosity after storage/initial viscosity (type B viscometer, 30 rpm)

A: The viscosity ratio not higher than 1.1;
B: The viscosity ratio exceeding 1.1 but not higher than 1.3;
C: The viscosity ratio exceeding 1.3 but not higher than 1.5;
D: The viscosity ratio exceeding 1.5.

Color manifesting ability

The pigment dispersions of Examples 1 to 6 and Comparative Examples 1 to 12 were each spread using a mayor bar on a quality paper, and the extents of dullness and gloss were evaluated by visual observation. When the dullness was slighter and the gloss higher, the color manifesting ability was judged to be better.

A: No dullness, high gloss;
B: Slight dullness, moderate gloss;
C: Much dullness, no feeling of gloss.

Table 2

EP 1 418 210 A1

| | Example | | | | | | | Comparative Example | | | | | | | | | | | |
|---|---|---|---|---|---|---|---|---|---|---|---|---|---|---|---|---|---|---|---|
| | 1 | 2 | 3 | 4 | 5 | 6 | 7 | 1 | 2 | 3 | 4 | 5 | 6 | 7 | 8 | 9 | 10 | 11 | 12 |
| Mixture | A | B | C | D | I | J | K | E | F | G | H | L | M | A | B | C | D | I | J |
| Average particle diameter | A | A | A | A | A | B | B | C | C | D | D | D | D | C | D | D | D | D | D |
| Particle size distribution | A | A | A | B | B | B | B | C | C | C | D | D | D | C | C | D | D | D | D |
| Precipitation or no precipitation | A | A | A | A | A | B | B | B | B | B | B | C | C | C | C | C | C | C | C |
| Fluidity change with time | A | A | A | A | B | B | B | C | C | C | C | D | D | C | C | D | D | D | D |
| Color manifesting ability | A | A | A | A | A | B | B | C | C | C | C | C | C | C | C | C | C | C | C |

INDUSTRIAL APPLICABILITY

As specifically described hereinabove referring to the examples and comparative examples, the aqueous pigment dispersions obtained by the production method according to the present invention are finer in pigment particle diameter, show better dispersion stability and have very good color manifesting ability as compared with the dispersions produced by using the ordinary pigment dispersing apparatus.

**Claims**

1. A method of producing aqueous pigment dispersions which comprises a mixture comprising a pigment, at least one species selected from the group consisting of polymeric emulsifiers having an HLB value of not less than 5 and surfactants having an HLB value of not less than 5, and an aqueous medium passing through an orifice having neither curves nor bends under pressure and, further, ejecting said mixture into that preceding portion of the mixture which has been ejected and is retained in a hollow member larger in diameter than the orifice to thereby attain dispersion of the pigment in the aqueous medium.

2. A method of producing aqueous pigment dispersions as defined in Claim 1, wherein said polymeric emulsifier has a weight average molecular weight of 1,000 to 1,000,000.

3. A method of producing aqueous pigment dispersions as defined in Claim 1 or 2, wherein use is made, as said polymeric emulsifier, of a polymeric emulsifier having a hydrophobic moiety and a hydrophilic moiety within the molecule, said hydrophobic moiety comprising at least one species selected from the group consisting of saturated cyclic hydrocarbon groups, unsaturated cyclic hydrocarbon groups, and alkyl groups containing not less than 4 carbon atoms, and said hydrophilic moiety comprising at least one species selected from the group consisting of carboxyl, sulfonic acid, and phosphoric acid groups.

4. A method of producing aqueous pigment dispersions as defined in any of Claims 1 to 3, wherein use is made, as said polymeric emulsifier, of a copolymer obtained by copolymerizing a hydrophobic group-containing radical-polymerizable monomer(s) and a hydrophilic group-containing radical-polymerizable monomer (s) under the conditions defined below under A and B, or of a copolymer obtained by copolymerizing a hydrophobic group-containing radical-polymerizable monomer(s), a hydrophilic group-containing radical-polymerizable monomer(s) and another radical-polymerizable monomer (s) under the conditions defined below under A and B,
said hydrophobic group-containing radical-polymerizable monomer(s) comprising at least one species selected from the group consisting of alicyclic radical-polymerizable monomers, aromatic radical-polymerizable monomers, and
radical-polymerizable monomers having, within the molecule, an alkyl group containing not less than 4 carbon atoms, and said hydrophilic group-containing radical-polymerizable monomer(s) comprising at least one species having a carboxyl group within the molecule.

Condition A: The total amount of the hydrophobic group-containing radical-polymerizable monomers is 10 to 70 mole percent relative to all the radical-polymerizable monomers.
Condition B: The total amount of the hydrophilic group-containing radical-polymerizable monomers is such that the copolymer obtained by copolymerizing all the radical-polymerizable monomers has an acid value of 50 to 250 mg KOH/g.

5. A method of producing aqueous pigment dispersions as defined in any of Claims 1 to 4, wherein use is made, as said polymeric emulsifier, of a copolymer obtained by polymerizing a hydrophobic group-containing radical-polymerizable monomer(s) and a hydrophilic group-containing radical-polymerizable monomer(s), or of a copolymer obtained by polymerizing a hydrophobic group-containing radical-polymerizable monomer(s), a hydrophilic group-containing radical-polymerizable monomer (s) and another radical-polymerizable monomer(s),
said hydrophobic group-containing radical-polymerizable monomer(s) comprising at least one species selected from the group consisting of styrene, styrene derivatives, aromatic (meth) acrylic monomers, alicyclic (meth) acrylic monomers and (meth)acrylic monomers having an alkyl group containing not less than 4 carbon atoms, and said hydrophilic group-containing radical-polymerizable monomer(s) comprising at least one species selected from the group consisting of (meth) acrylic acid, itaconic acid, crotonic acid, and maleic acid (anhydride).

6. A method of producing aqueous pigment dispersions as defined in Claim 1 or 2, wherein use is made, as said polymeric emulsifier, of at least one polymeric emulsifier selected from the group consisting of polyurethane compounds and polyester compounds.

7. A method of producing aqueous pigment dispersions as defined in Claim 1, wherein use is made, as said surfactant, of a surfactant having, within the molecule, a saturated cyclic hydrocarbon group or unsaturated cyclic hydrocarbon group and a hydrophilic moiety.

8. A method of producing aqueous pigment dispersions as defined in any of Claims 1 to 7, wherein said polymeric-emulsifier and/or surfactant occurs in said aqueous medium in an amount not smaller than that corresponding to the critical micelle concentration.

9. A method of producing aqueous pigment dispersions as defined in any of Claims 1 to 8, wherein a surface-treated pigment is used as said pigment.

10. A method of producing aqueous pigment dispersions as defined in any of Claims 1 to 9, wherein said mixture is passed through the orifice at a speed of 100 to 1,000 m/sec.

11. A method of producing aqueous pigment dispersions as defined in any of Claims 1 to 10, wherein an orifice having a diameter of 0.01 to 1.5 mm is used as said orifice.

12. A method of producing aqueous pigment dispersions as defined in any of Claims 1 to 11, wherein pigment dispersion is effected in a manner such that the preceding stream of the mixture comprising the pigment, at least one species selected from the group consisting of said polymeric emulsifiers and surfactants, and the aqueous medium which has passed through the orifice and is retained in the hollow member and directed toward the eject opening comes into contact, in the hollow member in a countercurrent manner in the direction of ejecting, with the succeeding stream of the mixture comprising the pigment, at least one species selected from the group consisting of said polymeric emulsifiers and surfactants, and the aqueous medium which has just passed through the orifice.

13. A method of producing aqueous pigment dispersions as defined in any of Claims 1 to 12, wherein said mixture is subjected to premixing treatment in a media-free type mixing apparatus and then passed through said orifice.

14. An aqueous pigment dispersion as produced by the method of producing aqueous pigment dispersions as defined in any of Claims 1 to 13.

Fig.1

Fig.2

## INTERNATIONAL SEARCH REPORT

| | International application No. |
|---|---|
| | PCT/JP02/06380 |

**A. CLASSIFICATION OF SUBJECT MATTER**
Int.Cl$^7$ C09C3/08, B01F17/00, B02C19/00

According to International Patent Classification (IPC) or to both national classification and IPC

**B. FIELDS SEARCHED**

Minimum documentation searched (classification system followed by classification symbols)
Int.Cl$^7$ C09C3/08, B01F17/00, B02C19/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 61-174937 A (Dainichiseika Color & Chemical Mfg. Co., Ltd.), 06 August, 1986 (06.08.86), Claims; page 1, lower right column, lines 2 to 5; page 5, lower left column, lines 12 to 16 (Family: none) | 1-14 |
| Y | JP 2000-239376 A (Dai Nippon Toryo Co., Ltd.), 05 September, 2000 (05.09.00), Claims; Par. No. [0026] (Family: none) | 1-14 |
| Y | JP 2001-87639 A (Maruo Calcium Co., Ltd.), 03 April, 2001 (03.04.01), Claims; Par. No. [0026] (Family: none) | 1-14 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 August, 2002 (30.08.02) | 17 September, 2002 (17.09.02) |

| Name and mailing address of the ISA/<br>Japanese Patent Office | Authorized officer |
|---|---|
| Facsimile No. | Telephone No. |

Form PCT/ISA/210 (second sheet) (July 1998)

**INTERNATIONAL SEARCH REPORT**

International application No.

PCT/JP02/06380

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 51-45367 A (Dai Nippon Toryo Co., Ltd.), 17 April, 1976 (17.04.76), Claims; page 1, lower right column, lines 2 to 5; Fig. 1 (Family: none) | 1-14 |
| Y | US 5465913 A (Nanomizer Inc.), 18 April, 1995 (18.04.95), Claims; column 1, lines 6 to 11; Figs. 2, 3 & JP 7-100404 A & EP 653246 A2 & CN 1112858 A | 1-14 |
| Y | Edited by Seijiro ITO, "Ganryo no Jiten", Kabushiki Kaisha Asakura Shoten, 25 September, 2000 (25.09.00), pages 392 to 404 | 1-14 |

Form PCT/ISA/210 (continuation of second sheet) (July 1998)